Europäisches Patentamt

(19) European Patent Office

Office européen des brevets

(11) Numéro de publication: **0 133 832**

**B1**

(12) **FASCICULE DE BREVET EUROPÉEN**

(45) Date de publication du fascicule du brevet:
14.01.87

(21) Numéro de dépôt: **84401592.5**

(22) Date de dépôt: **30.07.84**

(51) Int. Cl.⁴: **D 06 M 10/00,** C 08 J 7/18,
C 23 C 16/50, B 32 B 31/00

(54) **Procédé et dispositif de réalisation d'un revêtement polymérisé sur un substrat.**

(30) Priorité: **29.07.83 FR 8312576**

(43) Date de publication de la demande:
**06.03.85 Bulletin 85/10**

(45) Mention de la délivrance du brevet:
**14.01.87 Bulletin 87/3**

(84) Etats contractants désignés:
**AT BE CH DE FR GB IT LI LU NL SE**

(56) Documents cité:
**US-A-4 131 691**
**US-A-4 188 426**

**TEXTILBETRIEB, vol. 100, no. 5, mai 1982, pages 51-53, Würzburg, DE; F.K. DOLEZALEK et al.:
"Oberflächenmodifikation durch Corona- und Niedertemperaturplasma-Verfahren im textilen Bereich"**

(73) Titulaire: **ELECTRICITE DE FRANCE Service National, 2, rue Louis Murat, F-75008 Paris (FR)**
Titulaire: **Centre Technique Industriel dit: INSTITUT TEXTILE DE FRANCE, 35, rue des Abondances, F-92100 Boulogne- Billancourt Cédex (FR)**
Titulaire: **CENTRE TECHNIQUE DE L'INDUSTRIE DES PAPIERS, CARTONS ET CELLULOSES, Domaine Universitaire B.P. 7110, F-38020 Grenoble Cedex (FR)**

(72) Inventeur: **Amouroux, Jacques, 13 b. rue de Villeziers, F-91440 Bures S/Yvette (FR)**
Inventeur: **Goldman, Max, 5, Chemin des Buttes, F-91190 Gif S/Yvette (FR)**
Inventeur: **Arefi, Farzaneh, 15, rue des Clos St Marcel Apt. 25, F-92330 Sceaux (FR)**
Inventeur: **Rouzbehi, Farangis, 4, allée des Marronnniers, 92290 Chatenay Malabry (FR)**

(74) Mandataire: **Fort, Jacques, CABINET PLASSERAUD 84, rue d'Amsterdam, F-75009 Paris (FR)**

# Description

L'invention a pour objet la réalisation d'un revêtement carboné polymérisé sur un substrat et elle trouve une application particulièrement importante dans la réalisation sur un substrat d'un revêtement par polymérisation in situ de monomères et/ou de prépolymères fluocarbonés, contenus en phase vapeur ou dispersée dans une atmosphère en contact avec le substrat.

On a déjà proposé (US-A-4 188 426) un procédé de réalisation d'un revêtement polymérisé sur un substrat, du type dans lequel on met en contact la surface du substrat à revêtir avec une atmosphère contenant un monomère destiné à donner naissance au polymère de revêtement et on crée un plasma froid par décharge électrique dans l'atmosphère pour créer, à partir du monomère, des espèces réactives qui donnent naissance au revêtement polymérisé.

Le document US-A-4 188 426 propose d'utiliser, comme décharge électrique, la décharge luminescente ou la décharge Corona. Ces deux termes sont utilisés dans le document pour désigner une décharge en atmosphère à très basse pression (10⁻² Torr (0,0133 m bar) dans les exemples fournis par le document) et à des fréquences du domaine radioélectrique (de 3 à 100 MHz). Pour travailler en atmosphère aussi raréfiée, il faut utiliser un matériel complexe. Il est pratiquement impossible de traiter en continu et au défilé un matériau se présentant sous forme de bande ou de fibre de grande longueur. Enfin, les durées de traitement à adopter sont incompatibles avec les exigences industrielles.

Le document US-A-4 188 426 peut être regardé comme traduisant l'opinion courante suivant laquelle il n'est pas possible de réaliser des revêtements polymérisés dans un plasma froid autrement qu'à des pressions très faibles. Cette opinion générale est exposée par exemple dans la thèse de Hervé Carchano, Toulouse (1973), faisant elle-même référence à des travaux antérieurs. Suivant cette thèse, dès une pression de 3 Torr (4 mbar), l'épaisseur de revêtement que l'on peut obtenir est très faible.

L'invention vise à écarter les limitations des procédés antérieurement connus, notamment en ce qui concerne le travail en atmosphère raréfiée, de façon à arriver à une solution susceptible d'être mise en oeuvre de façon industrielle.

Pour cela, il a été nécessaire d'écarter les préjugés antérieurs concernant la nécessité de travailler à base pression et de faire la constatation que la décharge couronne s'accompagne de phénomènes très différents de ceux qui interviennent dans un plasma froid créé par excitation à radio-fréquence. En particulier, la décharge couronne s'accompagne d'un phénomène de vent électrique. En conséquence, l'invention propose un procédé du genre ci-dessus défini dans lequel la d?e1charge électrique est une décharge "couronne" ou "Corona" à pression proche de la pression atmosphérique entre une électrode à faible rayon de courbure (électrode filaire ou lame de couteau en général) et une électrode portant le substrat, dans une atmosphère contenant le monomère ou prépolymère en phase vapeur ou dispersée, généralement dans un gaz vecteur.

Le terme "décharge couronne" ou "décharge Corona" doit être interprété comme désignant la décharge auto-entretenue qui s'amorce dans un gaz au voisinage d'un conducteur de faible rayon de courbure soumis à un champ électrique intense non uniforme, mais non disruptif, comportant une décharge luminescente, présentant une stabilité électrique et visuelle, souvent associée à une décharge couramment appelée "streamer" qui constitue un régime récurrent où la décharge apparaît sous forme de décharges individuelles répétitives.

La décharge couronne sera avantageusement réalisée en courant alternatif, entre l'électrode à faible rayon de courbure et une contre-électrode portant le substrat et constituée par lui s'il est conducteur, maintenue à la masse. Ainsi, le vent électrique entraînera toujours les espèces réactives vers la substrat isolant. Au cours de l'alternance négative, le courant sera formé d'impulsions correspondant à des phénomènes d'ionisation dans la zone à fort champ, à une fréquence très élevée. Au cours de l'alternance positive, des aigrettes se propagent dans l'espace inter électrodes et apportent des ions positifs sur la surface du substrat isolant, ce qui provoque des ruptures de chaînes et des pulvérisations superficielles dans la zone d'impact du streamer. On réalise ainsi, en une seule opération, l'activation de la surface du substrat, la polymérisation in situ du monomère et l'accrochage du polymère sur le substrat par un phénomène vraisemblablement apparenté à un greffage.

Il est vraisemblable que l'obtention des couches d'épaisseur appréciable dans ces conditions est due au fait que levent électrique projette les espèces réactives vers le substrat qu'elles atteignent avec une énergie suffisante et avant recombinaison.

On utilisera avantageusement un courant électrique alternatif dans un domaine de fréquence inférieur à celui couramment dénommé des radiofréquences, c'est à dire au-dessous de 100 KHz. Une fréquence de quelques dizaines de KHz donne des résultats satisfaisants. Toutefois, pour des raisons de commodité, on sera quelquefois amené à travailler directement à la fréquence industrielle de 50 Hz ou 60 Hz. Dans ce cas, la décharge couronne s'amorce dès que la tension atteint la valeur correspondant à la loi de Paschen, c'est-à-dire une valeur fonction de la pression, de la distance interélectrodes, et du gaz méangé au monomère (argon ou hélium en général). La tension mise en oeuvre sera, pour les applications courantes, généralement de l' ordre de grandeur de 10⁴ volts à la pression atmosphérique.

L'invention permet de constituer un revêtement carboné et notamment fluocarboné d'imperméabilisation, d'ignifugation, de passivation sur des matériaux très divers. En particulier, elle permit de réaliser en continu de tels revêtements sur des fils, des fibres, des tissus et plus généralement sur tous matériaux permettant un contournement par la décharge sans précautions particulières, dans une atmosphère contenant une teneur d'oxygène non négligeable. On peut ainsi traiter des fils, filés, fibres de textile naturel ou artificiel, tel que polyester, polyamide, polyéthyleène, polyacrylonitrile.

Lorsque, comme ce sera le cas le plus fréquent, on souhaite réaliser un revêtement fluocarboné, le monomère choisi sera un monomère fluocarboné susceptible de donner naissance à des espèces réactives. Plusieurs produits parmi ceux connus sous la marque "FREON®" sont utilisables et, parmi eux, $h_2C=CF_2$ a donné des résultats très satisfaisants. On peut également utiliser des monomères parmi ceux mentionnés dans le document US-A-4 188 426 déjà évoqué ; des essais effectués avec l'acide acrylique, l'acide formique, C ClF$_3$ ont donné de bons résultats.

On a également réalisé une passivation superficielle de l'acier en atmosphère de SF$_6$ contenant une faible teneur d'éthyl méthyl cétone.

Dans une autre application de l'invention, on cherche à réaliser des revêtements odorants. On utilisera dans ce cas un monomère carboné ou fluocarboné, par exemple le tétrahydrogéraniol.

L'invention propose également un dispositif permettant de mettre en oeuvre le procédé ci-dessus défini, comprenant une enceinte munie de moyens permettant d'y faire circuler un mélange de monomère et de gaz vecteur, une électrode à fort rayon de courbure de support du substrat isolant sur lequel le revêtement doit être réalisé, une électrode à faible rayon de courbure placée parallèlement au substrat et des moyens permettant d'établir, entre les électrodes, une tension alternative de valeur suffisante pour créer une décharge couronne à une pression proche de la pression atmosphérique.

Chaque fois qu'il n'est pas indispensable de réduire la teneur en oxygène à une valeur très faible, il sera souhaitable d'adopter une pression légèrement inférieure à la pression atmosphérique, afin que les fuites éventuelles se produisent de l'atmosphère de l'atelier vers l'intérieur de l'enceinte et qu'il n'y ait pas dispersion de matériau toxique provenant de l'activation du monomère dans l'atelier.

L'invention sera mieux comprise à la lecture de la desceiption qui suit de modes particuliers d'exécution de l'invention, donnés à titre d'exemples non limitatifs.

La description se réfère aux dessins qui l'accompagnent dans lesquels :
— la Figure 1 montre schématiquement un dispositif utilisable pour traiter en continu un substrat se présentant sous forme de fil ou de bande procuse, tel qu'un tissu, par polymérisation d'un monomère gazeux ;
— la Figure 2 montre une variante de réalisation.

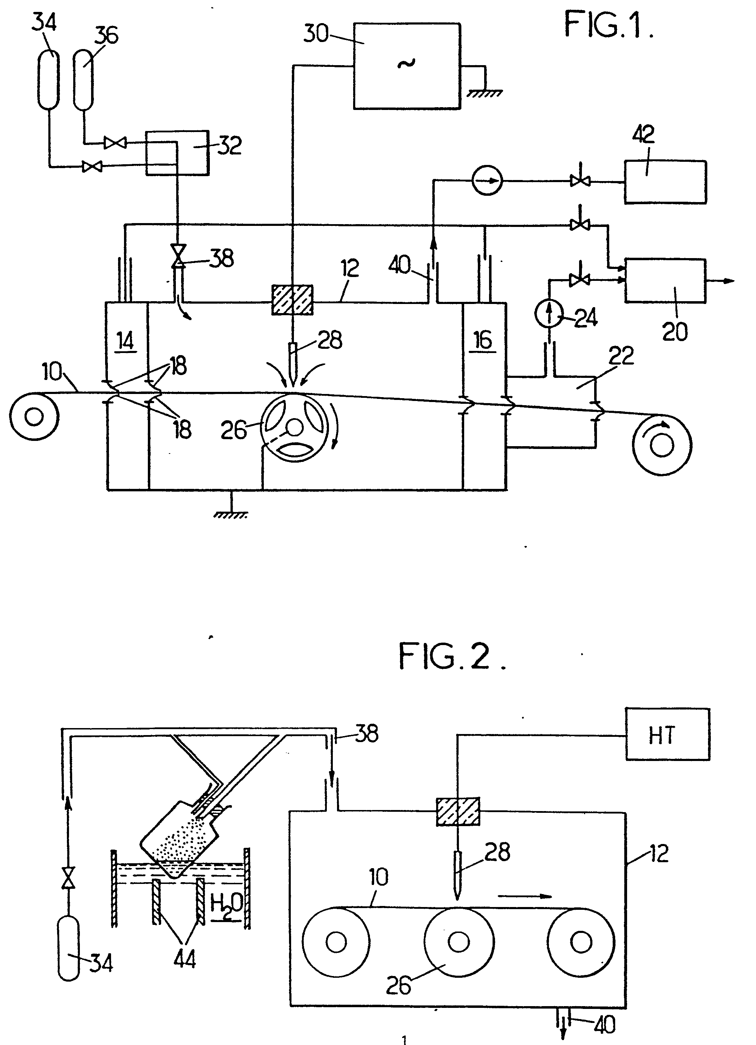

Le dispositif montré schématiquement sur la Figure 1 est destiné à traiter un substrat 10 se présentant sous forme de bande, qui peut être constitué par une feuille de papier à base de fibres de cellulose, une bande tissée ou non tissée en matériaux organiques ou inorganiques. Le dispositif comporte une enceinte 12 munie d'un sas d'entrée 14 et d'un sas de sortie 16. Ces sas sont délimités chacun par deux parois dans lesquelles est pratiquée une fente que traverse la bande 10. Une étanchéité relative est obtenue au moyen de lèvres souples 18 fixées aux parois et frottant sur la bande. Les sas sont reliés à un piège 20 de retenue de produits de décomposition toxiques. Pour limiter encore les pertes de tels produits à l'atmosphère, un espace de collection supplémentaire 22 muni d'une pompe d'extraction 24 et relié qu piège 20 peut être prévu sur le trajet du substrat 10 en aval du sas 16.

L'enceinte 12 contient des moyens de création d'effet couronne comportant un tambour métallique 26 relié à la masse et servant de support au substrat 10. Une électrode 28 est disposée dans l'enceinte à un emplacement tel qu'elle présente une surface à faible rayon de courbure (inférieur de plusieurs ordres de grandeur au rayon du tambour 26) face à la zone du substrat porté par le tambour. Sur la Figure 1, l'électrode 28 est constituée par une lame de couteau dont l'arête est parallèle à une génératrice du tambour 26, à une distance de quelques millimètres. On peut également utiliser comme électrode un fil présentant un diamètre inférieur à 2 millimètres. Plusieurs fils parallèles peuvent être prévus de façon à soumettre le substrat à plusieurs décharges couronne successives. Un tel fil peut être en tungstène, en molybdène, en titane, en vanadium ou en alliage dit "Monel" et, plus généralement, en tous matériaux mètalliques présentant des propriétés catalytiques ou non et resistant à la corrosion. L'électrode est alimentée par un générateur alternatif haute tension 30. Ce générateur fonctionnera à une fréquence inférieure à 100 KHz. Il fournira habituellement une tension de l'ordre de 10$^4$ volts (typiquement entre 10 et 20 kV) lorsque la distance entre le tambour 26 constituant contre-électrode et l'électrode 28 est comprise entre 1 et 5 mm. Le courant fourni sera avantageusement tel que l'on puisse atteindre des vitesses de défilement du substrat dépassant 1 m par minute.

L'enceinte 12 est munie de moyens d'alimentation en mélange de monomère et de gaz vecteur (argon ou hélium en général) et de renouvellement. Dans le mode de réalistation illustré sur la Figure 1, destiné à la constitution d'une couche de polymère fluocarboné, ces moyens comportent un mélangeur 21 qui reçoit, par l'intermédiaire de détendeurs respectifs, de L'argon provenant d'une bouteille 34 et $CH_2=CF_2$ gazeux provenant d'une bouteille 36. Le mélange pénètre dans l'enceinte 12, à une extrémité de celle-ci, par une tubulure munie d'une vanne de réglage 38. L'enceinte comporte, à l'opposé de la tubulure d'introduction, une tubulure 40 d'évacuation vers un récipient de recueil 42. La teneur de l'atmosphere en $CH_2=CF_2$ n'est pas critique et souvent il sera possible de se dispenser de gaz vecteur. Cette teneur peut être maintenue en contrôlant en permanence l'absorption de l'atmosphère au moyen d'un photomètre de photoabsorption calé sur une raie caractéristique du monomère. A titre d'exemple, on peut indiquer que des essais ont été effectués dans un dispositif contenant une contre-électrode constituée par un tambour de 10 cm de long et 6,5 cm de diamètre, tournant à une vitesse périphérique de 80 cm par minute. L'électrode 28 était constituée par un fil de tungstène de 250 μm de diamètre. Le générateur 30 fournissait un courant alternatif à cinquante périodes.

Le mode de réalisation montré en Figure 1 ne permet pas de maintenir la teneur en oxygène à une valeur très faible, du fait de entrées d'air par les joints. Lorsque le matériau à traiter est constitué par une pellicule contiue, par exemple de polyester, n'ayant pas subi préalablement un traitement d'activation superficielle, la teneur en $O_2$ doit être maintenue très faible. Pour cela, on peut adopter un dispositif du genre montré en Figure 2 où les organes correspondant à ceux de la Figure 1 sont désignés par le même numéro de référence. Les bobines d'amenée et de reprise du substrat 10 sont cette fois placées à l'intérieur de l'en ceinte étanche 12. Cette derinère est d'abord purgée à l'aide du gaz vecteur (He ou Ar exempt d'oxygène), puis alimentée en mélange de monomère ou de prépolymère. Un tel prépolymère peut être à l'état liquide. Dans ce cas, il doit être amené à l'état de brouillard. Le prépolymère peut être nébulisé par un générateur d'ultrasons 44.

Les conditions particulières de traitement de plusieurs substrats seront maintenant décrites et les résultats correspondants seront fournis.

**Exemple 1:**

On utilise un substrat de papier à base de fibres de cellulose, de 100 μm d'épaisseur.

La tension V entre électrodes est de 18,7 kV. La distance entre électrodes est de 3 mm pour une longueur d'électrodes de 10 cm. L'intensité I du courant capacitif est de 200 μA. Le temps **t** de l'essai est de 7 min.

On constate le dépôt d'un film marron foncé, mou, adhérant bien à la surface du substrat. Ce dépôt n'est pas soluble dans les solvants habituels (alcool, acétone), ce qui montre qu'il est très réticulé. Il a des propriétés très hydrophobes et diélectriques.

L'intervalle entre électrodes **d** de 3 mm apparaît comme un optimum, pour ce qui est de la formation du dépôt polymérisé sur le substrat, ainsi que pour la proportion de liaisons fluorées par rapport aux liaisons carbonées dans le polymère.

Avec les conditions opératoires indiquées, le poids du dépôt par cemtimère carré de substrat est de $0,8 \times 10^{-4}$ g/min avec un débit de monomère de 117 cm³/min.

**Exemple 2 :**

On répète l'essai précédent en utilisant comme substrat un tissu de 200 μm d'épaisseur.

Les meilleurs résultats sont obtenus pour les conditions opératoires suivantes :

V = 15 kV
I = 130 μA
t = 20 min
d (distance inter-électrodes) = 3 mm

Le dépôt obteunu s'accroche bien au tissu et le rend très hydrophobe.

**Exemple 3 :**

On utilise è titre de substrat un film de polyéthylène téréphtalate de μ d'épaisseur.

V = 13 kV
I = 130 μA
d = 30 mm
t = 15 min

Le dépôt obtenu est de $0,35 \times 10^{-4}$ g/cm²/min.

**Exemple 4 :**

On utilise à titre de substrat un papier de cellulose pure (ou un tissu de coton) d'épaisseur 100 μm. La tension de la décharge est sinusoïdale avec une fréquence de quelques dizaines de kHz. La distance interélectrodes est de 1 mm, l'intensité du courant est de quelques centaines de micro-ampères, le temps de l'essai est de 20 min.

Un flux d'hydrocarbure odorant constitué par du tétrahydrogéraniol :

Est nébulisé dans une chambre ultrasonique et introduit dans le réacteur sous flux d'argon. Les gouttelettes formées à l'intérieur du flacon contenant le tétrahydrogéraniol ont un diamètre moyen voisin de 1 μm. Comme dans les cas précédents, le débit d'hydrocarbures n'est pas un paramétre déterminant pour le temps de sejour des espèces actives dans le réacteur. On peut maintenir le générateur d'ultra sons 44 en fonctionnement permanent, à une fréquence comprise entre 1 et 10 kHz. La décharge Corona permet le greffage de la molécule sur le substrat. Celui-ci reste parfumé pendant un mois environ alors que le même substrat traité sous aérosol, sans décharge Corona, ne reste parfumé que quelques heures.

Dans les quatre exemples ci-dessus, on remarque l'existence d'un optimum opératoire pour ce qui est de la distance **d** entre électrodes et des conditions électriques.

Ce phénomène semble pouvoir être expliqué par les considérations suivantes :

La molécule de monomère injectée dans le réacteur s'excite électroniquement au voisinage de l'électrode haute tension par impact électronique. Les ions, les radicaux, molécules et atomes qui sont produits dans un espace inter-électrodes sont véhiculés par le vent électrique de l'électrode haute tension vers la contre-électrode. Lors de l'impact avec le matériau, les espèces énergétiquement activées réagissent entre elles et avec le substrat, ce qui se traduit par un greffage. Toutefois, on conçoit aisément que le temps de vie d'une espèce chimique dépend des paramètres distance interélectrodes et vitesse du vent électrique. Ainsi, la distance inter électrodes est un paramètre important pour exploiter au mieux la réactivité chimique des espèces produites. Si la distance devient trop importante, la vitesse de croissance diminue ou même s'annule : la tension aux électrodes pour maintenir la décharge provoque vraisemblablement une destruction des monomères de départ ou il y a recombinaison partielle avant le substrat. La distance sera généralement comprise entre 1 et 5 mm.

Le réglage optimal du procédé de polymérisation sous plasma prendra en considération l'importance du dépôt recherché, le temps de traitement et l'intensité de décharge. Cette intensité doit pratiquement rester inférieure à 30 μA/cm aux vitesses habituelles, de l'ordre du m/mn. Des vitesses plus élevées conduisent à travailler avec des courants accrus. Mais, dans la pratique, on ne peut pas dépasser largement 40 microampères par centimètre de longueur d'électrode sans risquer de passer en régime d'arc, provoquant la décomposition ou l'ablation du polymère formé.

**Revendications**

1. Procédé de réalisation d'un revêtement polymérisé sur un substrat, suivant lequel on met en contact la surface du substrat â revêtir avec une atmosphère confinée contenant un monomère ou prépolymère en phase dispersée destiné à donner naissance au polymère de revêtement et on crée un plasma froid par décharge électrique dans l'atmosphère confinée pour créer des espèces réactives qui donnent naissance au revêtement polymérisé, caractérisé en ce que la décharge électrique est une décharge Corona en courant alternatif à pression proche de la pression atmosphérique entre une électrode (28) à faible rayon de courbure et une électrode (26) portant le substrat (10), dans une atmosphère contenant le monomère ou prépolymère en phase vapeur ou dispersée.

2. Procédé selon la revendication 1, caractérisé en ce que la pression est légèrement inférieure à la pression atmosphérique, afin que les fruites éventuelles se produisent de l'extérieur vers l'intérieur de l'enceinte contenant ladite atmosphère et qu'il n'y ait pas dispersion de matériau toxique provenant de l'activation du monomère à l'extérieur.

3. Procédé selon la revendication 1 ou 2, caractérisé en ce que le monomère est un monomère fluocarboné tel que $CH_2=CF_2$.

4. Procédé selon la revendication 1 ou 2, caractérisé en ce que le monomère est un monomère organique odorant.

5. Procédé selon l'une quelconque des revendications 1 à 4, caractérisé en ce que la fréquence du courant alternatif est inférieure à 100 kHz.

6. Application du procédé selon l'une quelconque de revendications 1 à 5, ou revêtement de produit cellulosique, de tissu, de fibres isolées ou en nappe, ou de matériau plastique.

7. Dispositif de réalisation d'un revêtement polymérisé sur un substrat isolant, comprenant une enceinte (12) munie de moyens permettant d'y faire circuler un mélange de monomère et de gaz vecteur, une électrode (26) à fort rayon de courbure de support d'un substrat isolant sur lequel le revêtement doit être réalisé et une électrode (28) à faible rayon de courbure placée parallèlement au substrat, comprenant des moyens permettant d'établir, entre les électrodes, une tension alternative de tension suffisante pour créer entre elles une décharge couronne à une pression proche de la pression atmosphérique.

8. Dispositif selon la revendication 7, caractérisé en ce que l'électrode (28) à faible rayon de courbure est un fil de rayon inférieur à 1 mm ou une lame dont l'arête a un rayon de courbure inférieur à 1 mm, placé parallèlement à une génératrice d'un tambour mis à la masse constituant l'électrode de support (26).

**Patentansprüche:**

1. Verfahren zur Herstellung einer polymerisierten Schicht auf einem Substrat, wonach man die zu beschichtende Substratoberfläche mit einer umgrenzten Atmosphäre in Berührung bringt, die ein Monomer oder Präpolymer in dispergierter Phase enthält, das zu dem Polymer der Überzugschicht führen soll, und in der umgrenzten Atmosphäre durch elektrische Entladung ein Kaltplasma schafft, um reaktionsfähige Spezies auszubilden, die zu der polymerisierten Überzugsschicht führen, dadurch gekennzeichnet, daß die elektrische Entladung eine Wechselstrom-Korona-Entladung bei einem nahe dem Atmosphärendruck liegenden Druck zwischen einer Elektrode (28) mit kleinem Krümmungsradius und einer das Substrat (10) tragenden Elektrode (26) in einer Atmosphäre ist, welche das Monomer oder Präpolymer in Dampfphase oder dispergierter Phase enhält.

2. Verfahren nach Anspruch 1, dadurch gekennzeichenet, daß der Druck geringfügig unterhalb des atmosphärischen Druckes liegt, sodaß ein eventuelles Lecken von außen in das Innere des die genannte Atmosphäre enthaltenden unschlossenen Raumes hinein erfolgt und daß kein Austritt von aus der Aktivierung des Monomers stammendem toxischem Material nach außen stattfindet.

3. Verfahren nach Anspruch 1 oder 2, dadurch gekennzeichnet, daß das Monomer ein Fluorkohlenstoffmonomer wie $CH_2=CF_2$ ist.

4. Verfahren nach Anspruch 1 oder 2, dadurch gekennzeichnet, daß das Monomer ein riechendes organisches Monomer ist.

5. Verfahren nach einem der Ansprüche 1 bis 4, dadurch gekennzeichnet, daß die Frequenz des Wechselstroms unter 100 kHz liegt.

6. Anwendung des Verfahrens nach einem der Ansprüche 1 bis 5 auf die Beschichtung von Celluloseprodukten, Gewebe, Enzelfasern oder in Bahnenform oder von Kunststoffmaterial.

7. Vorrichtung zur Herstellung einer polymerisierten Schicht auf einem isolierenden Substrat, dadurch gekennzeichnet, daß sie einen umschlossenen Raum (12), der mit Mitteln ausgerüstet ist, die darin eine Umwälzung eines Gemisches aus Monomer und Trägergas ermöglichen, eine einen großen Krümmungsradius aufweisende Trägerelektrode (26) für ein isolierendes Substrat, auf welchem die Überzugsschicht hergestellt werden soll, und eine einen kleinen Krümmungsradius aufweisende Elektrode (28) umfaßt, die parallel zum Substrat angeordnet ist, wobei Mittel vorgesehen sind, die zwischen den Elektroden den Aufbau einer Wecheslepannung von ausreichender Spannung ermöglichen, um zwischen ihnen eine Korona-Entladung bei einem nahe dem Atmosphärendruck liegenden Druck zu bewirken.

8. Vorrichtung nach Anspruch 7, dadurch gekennzeichnet, daß die Elektrode (28) mit kleinem Krümmungsradius ein Draht mit einem unter 1 mm liegenden Radius oder eine Klinge ist, deren Schneide einen unter 1 mm liegenden Krümmungsradius aufweist, der bzw. die parallel zu einer Erzeugenden einer Walze angeordnet ist, die an Masse angeschlossen ist und die Trägerelektrode (26) ausbildet.

## Claims

1. A process for forming a polymerized coating on a substrate, wherein the surface of a substrate to be coated is contacted with a confined atmosphere containing a dispersed monomer or prepolymer which is to be transformed into the coating polymer and a cold plasma is generated by electric discharge in the confined atmosphere for creating reactive species which result into the polymerized coating, characterized in that the electric discharge is a Corona A.C. discharge under a pressure close to atmospheric pressure between an electrode (28) having a low curvature ratio and an electrode (26) which carries the substrate, in an atmosphere which contains the monomer or prepolymer as a vapor or dispersed phase.

2. A process according to claim 1, characterized in that the pressure is slightly lower than atmospheric pressure for possible leaks to occur from the outside to the inside of the enclosure which contains said atmosphere and for avoiding dispersion to the outside of toxic material due to the activation of the monomer.

3. A process according to claims 1 or 2, characterized in that said monomer is $H_2C=CF_2$.

4. A process according to claims 1 or 2, characterized in that the monomer is an organic odoriferous monomer.

5. A process according to any one of claims 1 – 4, characterized in that the A.C. frequency is lower than 100 kHz.

6. Application of a process according to any one of claims 1 – 5 to coating of cellulosic product, fabrics, fibers which are separate or in sheets, or plastics.

7. A device for forming a polymerized coating on an insulating substrate, comprising an enclosure (12) provided with means for flowing a mixture of monomer and vector gas therethrough, an electrode (26) with a large radius of curvature supporting the substrate on which the polymerized coating is to be formed; and an electrode (28) with a small radius of curvature placed parallel to the substrate; characterized by means for generating, across the electrodes, an AC voltage of a value sufficient to create a Corona discharge under a pressure close to normal atmospheric pressure.

8. A device according to claim 7, characterized in that the electrode which has a small radius of curvature is a wire having a radius lower than 1 mm or a blade whose edge has a radius of curvature lower than 1 mm, located parallel to a generatix of a grounded drum which constitutes the support electrod.

# FIG.1.

# FIG.2.